Europäisches Patentamt

**European Patent Office**

**Office européen des brevets**

(11) Publication number: **0 123 755**
A1

# EUROPEAN PATENT APPLICATION

(21) Application number: **83420067.7**

(22) Date of filing: **19.04.83**

(51) Int. Cl.³: **C 04 B 35/66,** C 04 B 35/04
// F27D1/16

(43) Date of publication of application: **07.11.84**
**Bulletin 84/45**

(84) Designated Contracting States: **BE DE FR GB IT LU NL SE**

(71) Applicant: **AIKOH CO. LTD., 1-39, Ikenohata 2-chome Taito-ku, Tokyo (JP)**

(72) Inventor: **Takashima, Masaru, 4-12, Takanawa, Minato-ku Tokyo (JP)**

(74) Representative: **Maureau, Pierre, Cabinet GERMAIN & MAUREAU Le Britannia - Tour C 20, Boulevard E. Déruelle, F-69003 Lyon (FR)**

(54) **Unshaped and refractory composition for coating or filling.**

(57) An unshaped, refractory composition for coating or filling, characterized in that said composition consists of a mixture of a magnesia aggregate containing more than 5% by weight of a portion whose particle diameter is less than 0.074 mm, and having particle diameter of less than 10 mm, with not more than 5% by weight of inorganic fibrous material and/or not more than 5% by weight of organic fibrous material, and at least two inorganic binders of $1 \sim 10\%$ by total weight in terms of solid state, and $5 \sim 25\%$ by weight of water.

# UNSHAPED AND REFRACTORY COMPOSITION FOR COATING OR FILLING

This invention relates to unshaped and refractory compositions suitable for use in processes for coating or filling, with refractories, construction, vessel, apparatus, etc. for which a refractory property is required.

These days unshaped refractories are being generally used in various fields of industrial circles, since they are effective for improving working efficiency, in combination with working processes utilizing vibration, centrifugal force, pressure force, injection, etc. as well as pouring, and feeding under pressure, and there are used a large variety of unshaped and refractory compositions suitable for working processes. However, there has not yet been found any satisfactory composition owing to rebound loss and droop, and it can be said that such compositions are still in their developing stage.

In these circumstances the inventor of this invention has noticed that a dry process of mixing solid and liquid at a nozzle portion is superior in refractory and anticorrosive properties of the working layers to a wet process of using refractory slurry, and as a result of having studied the adaptation of unshaped and refractory compositions to working process they have been able to obtain an effective knowledge thereby to make the present invention whose compositions have good workability both in coating and filling.

According to the present invention it is possible to form a strong, refractory layer at any place where refractory coating or filling is needed, irrespective of plane, curved surface, concave portion, void portion, and the inner surface or the outer surface of tubular body, not to speak of melting furnaces such as blast furnace, converter, electric furnace and reverberatory furnace, vessels for molten metal such as ladle and tundish, vessels for treating molten metals used in Rheinetahl-Hereus process and Dortmund Hüttenunion process, various industrial, heating furnaces, various accessories and accessory positions of all these furnaces and vessels, and appliances and apparatuses used in accompanying working. Further, it is possible to resolve the problem such as rebound loss or droop.

The object of the invention is to provide an unshaped, refractory composition for coating or filling, which is used in a process where a refractory mixture fed under air pressure in the range $1 \sim 10$ Kg/cm$^2$ is mixed at a nozzle portion with water or an aqueous solution containing part of refractory, which is fed under pressure in the range $0.5 \sim 5$ Kg/cm$^2$, the mixture is discharged and then it reaches the portion to be worked while being subjected to a continuous hardening reaction whereby said portion is provided with a refractory coating or filling, characterized in that said composition consists of a mixture of a magnesia aggregate containing more than 5 % by weight of a portion whose particle diameter is less than 0.074 mm, and having particle diameter of less than 10 mm, with not more than 5 % by weight of organic fibrous material and/or not more than 5 % by weight of inorganic fibrous material, at least two inorganic binders of $1 \sim 10$ % by total weight in terms of solid state, and $5 \sim 25$ % by weight of water.

When applying the unshaped, refractory composition of the invention said refractory mixture and water are fed under air pressure in the range $1 \sim 10$ Kg/cm2 and under pressure in the range $0.5 \sim 5$ Kg/cm2 respectively so as to be mixed at said nozzle portion. By the nozzle portion referred to herein is meant a portion where the refractory mixture and water are mixed, and either the inside of the nozzle or the outside near the tip thereof will do.

According, it does not matter whether the shape of the nozzle may be of a single pipe or double pipes, and in the case of single pipe the opening for supplying water can be provided at an optional position. Further, it is possible to optionally take the discharging mode, within said pressure range, ranging form blowing and beating to a flowing-like state.

In the unshaped, refractory composition for coating

3

or filling according to the invention, the magnesia aggreage is of known one which is highly refractory and has a high softening point under load, as basic refractory, and which exhibits an excellent corrosive resistancy at the place where basic slug co-exists. As the magnesia aggregate there canbe used one or more of magnesia clinker, dolomite clinker, peridotite, chrome magnesia and magnesia spinel. The reason why the aggregate has particle diameter of less than 10 mm and contains more than 5 % by weight of a portion whose particle diameter is less than 0.074 mm, is to make easier the discharge of the composition from the nozzle when working, and with the particles rougher than in said range the aggregate brings about an inconvenient trouble for the discharge of the composition. In addition, it is preferable for the aggregate, from the refractory point of view after coating or filling, to have a distribution of different particle sizes than in a uniform particle size, and it will be all right to set the distribution of the particle size in said range according to the working thickness or the discharging mode as required.

According to the invention, the inorganic and organic fibrous materials are used to increase the adhesiveness of the refractory composition to the portion to be worked thereby to decrease rebound loss, and such fibrous materials are effective both for cold working and hot working. As the inorganic fibrous materials there can be used more than one of rock wool, glass wool, slag wool, kaolin fiber, carbon fiber, zirconia fiber and silicon carbide fiber, while as the organic fibrous material there can be used more than one of cellulose fibers such as pulp, paper and waste cotton, synthetic fibers such an nylon, vinylon and polyester fiber, and artificial fibers such as acetate fiber.

In the invention any inorganic binder can be used if it is soluble or emulsifiable in water. That is, it is possible to select from among oxides, hydroxides, ni-

4

trides, fluorides, chlorides, bromides, iodides, carbonates, nitrates, sulphates, phosphates, and silicates of magnesium, calcium, strontium, barium, boron, aluminium, lithium, sodium, potassium, rubidium and cesium, and composite compounds thereof.

Such binders bind, with hydrate, the aggregate and the fibrous materials in the presence of water, and preferably they will be employed in more than one kinds. Further, it is preferable to add, as an aqueous solution, a portion or the whole of the inorganic binder, and particularly in the case of adding a portion of the binder as an aqueous solution it would be preferable to add other inorganic binder different in kind from the aqueous solution, in the powdery state, considering the differences in formation speed, strength, etc. of the coating layers, which differences may be caused by hy-hydrating reaction speed and the temperature at working portion.

The water may be either at normal temperature or a temperature heated by steam or other heat source, and particularly in the case of hot working a warmed water would be effective for improving the adhesive rate of the refractory. Further, as the optimum amount in which the mixture reacts to be coaggulated or hardened to exhibit a strength, water is added by 5~25 % by weight to the aggregate, and less than 5 % water does not form a hydrate of sufficient quantity while more than 25 % water is too much whereby it lowers the mechanical strength.

The fibrous materials, whether inorganic or organic, give an adhesive effect to the portion to be worked, within 5 % by weight, and to be more than 5 % is not preferable because the coating layer becomes more porous due to the high temperature after the formation of said coating layer so that the strength against high temperature is lowered to hinder the use over longer period of time. Not more than 10 % by weight of the inorganic binders will be sufficient to obtain a binding strength

5

needed for the coating layer, but less than 1 % by weight of said binders will not present sufficient strength.

Carbonaceous materials have a good thermal conductivity, a smaller thermal expansivity and an anticorrosion property, and therefore by adding them it is capable of preventing the cracking, spalling or the corrosion of slag line when hot used, and as such materials there can be employed more than one of graphite, oil coke, pitch coke and carbon black. Not more than 10 % by weight of the carbonaceous materials will suffice, and it is not preferable to exceed this amount since the mechanical strength is lowered.

Again according to the present invention, is said working process under pressure the hardening reaction of the refractory composition finishes after the composition has reached the portion to be worked, so that there does not occur any droop which is noticed in conventional processes and the rebound loss in slight. If droop is feared to occur according to circumstances it may be a preferable way to use wire-netting or expanded metal.

The present invention will now be described, by way of example, with reference to a tundish lining for a continuous casting of steel.

Table 1    Mixing exemples of refractory composition (% by weight)

| | Example 1 | Example 2 |
|---|---|---|
| Magnesia clinker (- 10 mm 100 % - 0.074 mm 90 %) | 89 | 80 |
| Rock wool | 5 | 3 |
| Waste cotton | - | 3 |
| Magnesium sulphate | - | 6 |
| Sodium phosphate | 2 | - |
| Sodium silicate | 4 | 2 |
| Oil coke | - | 5 |
| Water | 10 | 11 |

6

By using the mixture shown in Table 1, there were carried out lining coatings to the refractory bricks of tundish for the continuous casting of steel, in such manner that the components other than water were fed under an air pressure of 5.3 Kg/cm2 to the nozzle portion of a pipe having 1 m length and 34.0 mmø outside diameter form a pressure-resistant hose reinforced with wire-netting and having 25 mm diameter and 30 m length, and similary water was fed under and air pressure of 3.3 Kg/cm2 from a hose of 13 mm diameter and 30 m length whereby said components and said water were mixed at the mixing portion of the nozzle, and then the mixture was discharged. The surface temperature of the bricks was maintained at 500°C and the distance between the nozzle tip and the brick surface was retained at 40 cm. The coating layer was formed at the rate of 25 mm/sec, and the coagulating and hardening reactions finished at the same time as the refractory composition reached the brick surface so that droop was not noticed at all and the rebound loss which is more than 10 % in conventional processes was only 1 %. The refractory composition was coated at 30 mm on average, the coated layer was heated at 1000°C for 30 minutes, and then the tundish was practically operated, but there was not noticed any crack in the coated layer when preheated, the layer was bearable for the use of continuous-continuous castings of five charges of 200 ton steel melt, and the minimum remaining thickness of the coating layer after the completion fo the castings was 10 mm to be a satisfactory result.

7

- CLAIMS -

1 - An unshaped, refractory composition for coating or filling, characterized in that said composition consists of a mixture of a magnesia aggregate containing more than 5 % by weight of a portion whose particle diameter is less than 0.074 mm, and having particle diameter of less than 10 mm, with not more than 5 % by weight of inorganic fibrous material and/or not more than 5 % by weight of organic fibrous material, at least two inorganic binders of 1~10 % by total weight in terms of solid state, and 5~25 % by weight of water.

2 - An unshaped, refractory composition for coating or filling as described in Claim 1 wherein the magnesia aggregate consists of a least one of magnesia clinker, dolomite clinker, peridotite, chrome magnesia and magnesia spinel.

3 - An unshaped, refractory composition for coating or filling as described in Claim 1, wherein the inorganic fibrous materials consist of at least one or more than one of rock wool, glass wool, slag wool, kaolin fiber, carbon fiber, zirconia fiber, and silicon carbide fiber.

4 - An unshaped, refractory composition for coating or filling as described in Claim 1 wherein the organic fibrous material consists of at least one of pulp, paper, waste cotton, nylon, vinylon, polyester fiber and acetate fiber.

5 - An unshaped, refractory composition for coating or filling as described in Claim 1 wherein the inorganic binder consists of at least one of dry magnesia sulphate, magnesia chlorite, alkali silicate, alkali carbonate, alkali phosphate, aluminium phosphate, alkali aluminate, boric acid, borax alkali borofluoride, glass, clay and bentonite.

6 - An unshaped, refractory composition for coating or filling as described in Claim 1 wherein the water is pure water.

7 - An unshaped, refractory composition for coating

8

or filling as described in Claim 1 wherein the water is an aqueous solution of an inorganic binder.

8 - An unshaped, refractory composition for coating or filling as described in Claim 1 wherein said composition is added with not more than 10 % by weight of carbonaceous material.

9 - An unshaped, refractory composition for coating or filling as described in Claim 1 wherein the carbonaceous material is at least one of graphite, oil coke, pitch coke, and carbon black.

10 - A process for coating or filling the portion to be worked, with said unshaped, refractory composition, characterized in that a refractory mixture fed under air pressures in the range $1\sim10$ Kg/cm$^2$ is mixed within the nozzle with water or an aqueous solution containing a portion of the refractory, mixed composition, which is fed under the original pressures in the range of $0.5\sim5$ Kg/cm$^2$, said mixture is discharged from the nozzle and then it reaches the portion to be worked while maintaining a hardening reaction.

European Patent
Office

**EUROPEAN SEARCH REPORT**

0123755

Application number

EP 83 42 0067

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-2 217 315 (STE GENERALE DES PRODUITS REFRACTAIRES) <br> * Claims 1, 4 * <br><br> --- | | C 04 B 35/66 <br> C 04 B 35/04 // <br> F 27 D 1/16 |
| A | US-A-3 357 842 (J. BOWMAN) <br><br> * Claim 1 * <br><br> ----- | | |

| | TECHNICAL FIELDS SEARCHED (Int. Cl. ³) |
|---|---|
| | C 04 B 35/04 <br> C 04 B 35/66 <br> C 04 B 35/68 <br> C 04 B 35/80 <br> C 04 B 35/82 |

The present search report has been drawn up for all claims

| Place of search | Date of completion of the search | Examiner |
|---|---|---|
| BERLIN | 05-12-1983 | STROUD J.G. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82